# EUROPEAN PATENT SPECIFICATION

(11) **EP 1 977 995 B1**
(45) Date of publication and mention of the grant of the patent: **10.08.2011**
(21) Application number: 07007205.3
(22) Date of filing: 05.04.2007
(51) Int. Cl.: C01B 21/14

(54) **Method for manufacturing hydroxylamine**
Verfahren zur Herstellung von Hydroxylamin
Procédé de fabrication d'hydroxylamine

(43) Date of publication of application: 08.10.2008
(60) Divisional application: 10158775.6
(73) Proprietor: China Petrochemical Development Corporation, Taipei City (TW)
(72) Inventor: Yang, Shu-Hung, Songshan District, Taipei City (TW); Hsieh, Cheng-Fa, Songshan District, Taipei City (TW); Hung, Yi-Bau, Songshan District, Taipei City (TW)
(74) Representative: Epping - Hermann - Fischer

(56) References cited:
- WO-A-2006/050962
- US-A- 3 720 755
- US-A- 3 767 758
- US-A- 4 062 927
- US-A- 5 651 951

## Description

### BACKGROUND OF THE INVENTION

### 1. Field of the Invention:

The present invention relates to a method for manufacturing hydroxylamine, particularly a method using hydrogen gas as reducing agent to reduce the nitrate ions to produce hydroxylamine.

### 2.Description of Related Art:

Hydroxylamine related manufacturing steps are generally combined with other manufacturing steps to constitute a recycling system in the industrial application, for example, hydroxylamine - oximation recycling system, i.e., using phosphate salt as an aqueous reaction medium, and using nitric acid, hydrogen gas as raw materials in a catalytic reaction to reduce nitrate ions to hydroxylamine, followed by adding cyclohexanone to the produced hydroxylamine to proceed the oximation reaction to form cyclohexanone oxime. After the foregoing oximation reaction, the resultant reaction mixture was supplemented with nitric acid or subjected to adsorption of nitrous gas to generate nitric acid in order to increase the required amount of nitrate ions, which were consequently transferred into a hydroxylamine reactor for the hydroxylamine synthesis. The reactions could be shown as follows:
Reaction of hydroxylamine to produce hydroxylamine phosphate

   NH₄NO₃+2H₃PO₄+3H₂→NH₃OH.H₂PO₄+NH₄H₂PO₄+H₂O
Oximation reaction to produce cyclohexanone oxime

   NH₃OH.H₂PO₄+C₆H₁₀O→C₆H₁₀NOH+H₂O+H₃PO₄
Supplementation of nitrate ion to the inorganic phosphate manufacturing solution.

   HNO₃+H₂PO₄⁻→NO₃⁻+H₃PO₄

During the manufacturing process, the aqueous reaction medium was recycled through the hydroxylamine reaction zone and the cyclohexanone oxime synthesizing zone. The content and the quality level of the reaction medium directly affected the efficiency of the hydroxylamine production. US patent 3767758 discloses that the aqueous reaction medium containing metals such as Mo, Rh and Ru declines the selection rate of the hydroxylamine production. US patent 4062927 discloses that acidic solution corrupts the equipments and devices to increase the amount of heavy metal contamination in aqueous reaction medium, particularly, the generated Mo metal contamination may decline the selection rate by 5 to 15%. Said patent teaches the using of ferric ammonium phosphate as a precipitant to remove the metal ions in the reaction medium by co-precipitation. However, the selection rate of the hydroxylamine production is still lower than 87% according to the disclosure of said patents.

US patent 3720755 describes a process for catalytic reduction of nitric acid to hydroxylamine with molecular hydrogen in an aqueous medium containing phosphoric acid. The amount of contaminants in the buffered phosphoric acid starting solution is reduced to less than 0.2 mg/l Cu by treating it with a Pd catalyst on active carbon and hydrogen.

Therefore, a method in which the process is simple and effectively increasing the selection rate of the hydroxylamine production is indeed required.

### SUMMARY OF THE INVENTION

It is an object of the present invention to provide a method for manufacturing hydroxylamine with high selection rate.

In order to achieve the aforesaid and other purposes, the present invention provides a method for manufacturing hydroxylamine. The present method is carried in an aqueous reaction medium containing acidic buffer agents and nitrate ions in the presence of little metal impurities such as Fe or Cu in the presence of catalyst and utilize hydrogen gas as the reducing agent to reduce nitrate ions to hydroxylamine. The method of the present invention uses the aqueous reactive medium containing low amount or none of metal impurities to process hydroxylamine synthesis reaction in order to increase the selection rate of hydroxylamine production.

### EXAMPLES

The present invention is further explained by using exemplified embodiments to clarify the characteristics and effects of the present invention.

The method of the present invention is carried out in an aqueous reaction medium containing acidic buffer agents such as sulfuric acid, phosphoric acid or salts thereof, and nitrate ions with little or without metal impurities, in the presence of catalyst by reducing hydroxylamine with hydrogen gas as the reducing agent to reduce nitrate ions to hydroxylamine. This method can elevate the selection rate of hydroxylamine production by lowering the amount of metal impurities in the aqueous reaction medium. In the present invention, the selection rate of hydroxylamine production is defined as follows:
selection rate of hydroxylamine production = 2 times hydroxylamine yield/amount of hydrogen ion consumption X 100%.

In one embodiment, the method of the present invention provides an inorganic phosphate solution used as the aqueous manufacturing reaction medium to synthesize hydroxylamine phosphate. The components of the aqueous reaction medium include phosphate ion, ammonium ion, nitrate ion and metal impurities such as Fe, Mo, Ni, Bi, Co, Cu, Mn, Sn, W and Zn etc. In order to prevent the decrease of the selection rate of hydroxylamine production caused by the metal impurities in the aqueous reaction medium. This embodiment illustrates that the aqueous reaction medium was pretreated for the purpose of lowering the amount of the metal impurities therein, and then was introduced into the hydroxylamine synthesizing zone to proceed the hydroxylamine synthesis reaction. The pretreatment can be carried by, but not limited to, for example, adding precipitant to react with metal impurities to form precipitated metal complexes which are removed thereafter, or by utilizing resin to adsorb the metal impurities, or by any appropriate methods that can decrease or remove the metal impurities.

In the method of the present invention, the reaction condition for processing the hydroxylamine synthesis in the hydroxylamine synthesis reactor is not particularly limited. The reaction conditions generally used for the reduction of nitrate ions through the addition of hydrogen gas as reducing agent would be suitable. For example, it may be performed preferably at a temperature of 20 to 100°C, more preferably 30 to 90°C, still preferably 40 to 65°C; and preferably under a pressure of 10 to 30 kg/ cm², more preferably 18 to 26 kg/cm², still preferably 18 to 24 kg/cm²; preferably at pH of 0.5 to 6, more preferably 1 to 3.5. As to the constitution of the entering gas for hydroxylamine reaction, based on the total amount of hydrogen gas and nitrogen gas, the content of hydrogen gas is preferably in the range of 30 to 70%, more preferably in the range of 45 to 55%. The catalyst used in the hydroxylamine reaction includes, but not limited to, the noble metal catalyst containing Pd, or Pd-Pt. The carrier for catalyst includes, but not limited to, carbon or aluminum oxide. In general, based on the total weight of catalyst carrier and catalyst, the amount of the noble metal catalyst is preferably in the range of 1 to 25% by weight, more preferably in the range of 5 to 15% by weight. The amount of catalyst used in the hydroxylamine reaction, based on the total amount of the acidic buffer solution, is usually in the range of 0.2 to 5% by weight.

In another embodiment, the reaction step is performed by utilizing phosphate inorganic manufacturing solution as the aqueous reaction medium in the hydroxylamine-oximation recycling system for manufacturing hydroxylamine phosphate. The metal impurities such as Cu the aqueous reaction medium can be removed by use of resin. In this embodiment, the amount of metal impurities such as Cu in the aqueous reactipm medium through the process of the hydroxylamine synthesis in the hydroxylamine synthesis reactor is preferably less than 0.9ppm, more preferably less than 0.09ppm, still preferably less than0.05ppm. The selective rate of the hydroxylamine product is preferably higher than 90%, more preferably higher than 91.5%, still preferably higher than 94%.

In this embodiment, the aqueous reactive medium can be pretreated to remove the metal impurities such as Cu. The reaction system is supplemented with the nitrate ions before processing the hydroxylamine synthesis. Based on the total amount of the aqueous reactive medium, the content of the nitrate ion in the acidic buffer solution is preferably 13 to 18% by weight, more preferably 14 to 16.5% by weight. The reaction condition for processing the hydroxylamine synthesis is not particularly limited. The reaction conditions generally preformed by using hydrogen gas as reducing agent to reduce nitrate ions would be suitable. For example, it can be performed preferably at a temperature of 20 to 100°C, more preferably 30 to 90°C, still preferably 40 to 65°C; and preferably under a pressure of 10 to 30 kg/ cm², more preferably 18 to 26 kg/cm², still preferably 18 to 24 kg/cm²; preferably at pH of 0.5 to 6, more preferably 1 to 3.5. As to the constitution of the entering gas for hydroxylamine reaction, based on the total amount of hydrogen gas and nitrogen gas, the content of hydrogen gas is preferably in the range of 30 to 70%, more preferably in the range of 45 to 55%. The catalyst used in the hydroxylamine reaction includes, but not limited to, the noble metal catalyst containing Pd, or Pd-Pt. The carrier for catalyst includes, but not limited to, carbon or aluminum oxide. In general, based on the total weight of catalyst carrier and catalyst, the amount of noble metal catalyst is preferably in the range of 1 to 25% by weight, more preferably in the range of 5 to 15% by weight. The amount of catalyst used in the hydroxylamine reaction, based on the total amount of the acidic buffer solution, is usually in the range of 0.2 to 5% by weight.

The method of the present invention is performed by utilizing aqueous reaction medium with low metal impurities, in which the content of Cu is particularly below 0.9ppm, so that the selective rate of hydroxylamine product is elevated to more than 87%, or even more than 90%, even to 94% or above.

The invention is further illustrated by the following examples in detail for clarifying the characteristics and effectiveness of the present invention. The detailed embodiments are merely used for clarifying the characteristics of the present invention.

The present invention is not limited to the particular embodiment illustrated.

### Example 1

The aqueous reaction medium, hydrogen gas and nitrogen gas were introduced into the hydroxylamine synthesizing zone. The hydroxylamine synthesis was carried out in the presence of Pd-Pt catalyst, at the temperature of 50°C under the pressure of 24 kg/cm². The Cu metal content was analyzed by induced coupled plasma-optical emission spectrometry (ICP-OES) to give a result of Cu metal content of 0.83ppm. The selection rate of hydroxylamine production was 90.5%. Based on the total amount of the aqueous reaction medium, the components of the hydroxylamine reaction medium introduced into the hydroxylamine synthesizing zone were as follows:
[H⁺] 0.298% by weight
[H₂PO₄] 20.13% by weight
[NH₄⁺] 4.19% by weight
[NH₃OH⁺] 0.082% by weight
[NO₃] 15.6% by weight

### Example 2

The aqueous reaction medium, hydrogen gas and nitrogen gas were introduced into the hydroxylamine synthesizing zone. The hydroxylamine synthesis was carried out in the presence of Pd-Pt catalyst, at the temperature of 50°C under the pressure of 24 kg/cm². The Cu metal content was analyzed by induced coupled plasma-optical emission spectrometry (ICP-OES) to give a result of Cu metal content of 0.08ppm. The selection rate of hydroxylamine production was 91.50%. Based on the total amount of the aqueous reaction medium, the components of the hydroxylamine reaction medium introduced into the hydroxylamine synthesizing zone were as follows:
[H⁺] 0.295% by weight
[H₂PO₄⁻] 20.13% by weight
[NH₄⁺] 4.15% by weight
[NH₃OH⁺] 0.082% by weight
[NO₃⁻] 15.8% by weight

### Example 3

The aqueous reaction medium, hydrogen gas and nitrogen gas were introduced into the hydroxylamine synthesizing zone. The hydroxylamine synthesis was carried out in the presence of Pd-Pt catalyst, at the temperature of 50°C under the pressure of 24 kg/cm². The Cu metal content was analyzed by induced coupled plasma-optical emission spectrometry (ICP-OES) to give a result of Cu metal content of 0.03ppm. The selection rate of hydroxylamine production was 94.20%. Based on the total amount of the aqueous reaction medium, the components of the hydroxylamine reaction medium introduced into the hydroxylamine synthesizing zone were as follows:
[H⁺] 0.304% by weight
[H2PO₄⁻] 20.18% by weight
[NH₄⁺] 4.08% by weight
[NH₃OH⁺] 0.064% by weight
[NO₃⁻] 16.4% by weight

### Comparative Example 1

The aqueous reaction medium, hydrogen gas and nitrogen gas were introduced into the hydroxylamine synthesizing zone. The hydroxylamine synthesis was carried out in the presence of Pd-Pt catalyst, at the temperature of 50°C under the pressure of 24 kg/cm². The Cu metal content was analyzed by induced coupled plasma-optical emission spectrometry (ICP-OES) to give a result of Cu metal content of 1.05ppm The selection rate of hydroxylamine production was 85.21%. Based on the total amount of the aqueous reaction medium, the components of the hydroxylamine reaction medium introduced into the hydroxylamine synthesizing zone were as follows:
[H⁺] 0.290% by weight
[H₂PO₄⁻] 20.11 % by weight
[NH₄⁺] 4.17% by weight
[NH₃OH⁺] 0.079% by weight
[NO₃] 14.34% by weight

### Comparative Example 2

The aqueous reaction medium, hydrogen gas and nitrogen gas were introduced into the hydroxylamine synthesizing zone. The hydroxylamine synthesis was carried out in the presence of Pd-Pt catalyst, at the temperature of 50°C under the pressure of 24 kg/cm². The Cu metal content was analyzed by induced coupled plasma-optical emission spectrometry (ICP-OES) to give a result of Cu metal content of 0.97ppm. The selection rate of hydroxylamine production was 86.8%. Based on the total amount of the aqueous reaction medium, the components of the hydroxylamine reaction medium introduced into the hydroxylamine synthesizing zone were as follows:
[H⁺] 0.293% by weight
[H₂PO₄⁻] 20.13% by weight
[NH₄⁺] 4.15% by weight
[NH₃OH⁺] 0.074% by weight
[NO₃⁻] 15.2% by weight

Table 1 Shows the relationships between the Cu metal contents in the aqueous reaction medium and the selection rates of the hydroxylamine production in the above examples.

**Table 1**

| | Cu metal content (ppm) | Selection rate (%) |
|---|---|---|
| Example 1 | 0.83 | 90.50 |
| Example 2 | 0.08 | 91.50 |
| Example 3 | 0.03 | 94.20 |
| Comparative Example 1 | 1.05 | 85.21 |
| Comparative Example 2 | 0.97 | 86.80 |

From the results of the brief comparison of the above Examples with the Comparative Examples, it is found that low amount of metal impurities contained in the aqueous reaction medium for the hydroxylamine synthesis reaction could significantly promote the selection rate of the hydroxylamine production.

## Claims

1. A method for manufacturing hydroxylamine, comprising the steps of:
pretreating an aqueous reaction medium taken from an oximation reaction in a hydroxylamine-oxime cycling process to reduce the amount of Cu metal in the aqueous reaction medium to less than 0.09 ppm, wherein the aqueous reaction medium comprises an acidic buffer agent, nitrate ions, hydroxylamine and metal impurities;
introducing the aqueous reaction medium into a hydroxylamine synthesis reactor; and
reducing the nitrate ions to hydroxylamine in the presence of a catalyst in the aqueous reaction medium.

2. The method for manufacturing hydroxylamine according to claim 1, wherein the amount of Cu metal is less than 0.05 ppm.

3. The method for manufacturing hydroxylamine according to claim 1, wherein the acidic buffer agent is selected from the group consisting of sulfuric acid, phosphoric acid and salts thereof.

4. The method for manufacturing hydroxylamine according to claim 1, wherein the acidic buffer agent is phosphate.

5. The method for manufacturing hydroxylamine according to claim 1, wherein the step of reducing the nitrate ions to the hydroxylamine is carried out at temperature of from 20 to 100 °C.

6. The method for manufacturing hydroxylamine according to claim 1, wherein the step of reducing the nitrate ions to the hydroxylamine is carried out at a pressure of from 10 to 30kg/cm².

7. The method for manufacturing hydroxylamine according to claim 1, wherein the step of reducing the nitrate ions to the hydroxylamine is carried out at a pH of from 0.5 to 6.

8. The method for manufacturing hydroxylamine according to claim 1, wherein the catalyst is selected from the group consisting of Pd and Pd-Pt noble metals.

## Patentansprüche

1. Verfahren zur Herstellung von Hydroxylamin, welches die folgenden Schritte umfasst:
Vorbehandeln eines aus einer Oximierungsreaktion in einem zyklischen Hydroxylamin-Oxim-Verfahren entnommenen wässrigen Reaktionsmediums zur Absenkung der Menge an Cu-Metall im wässrigen Reaktionsmedium auf weniger als 0,09 ppm, wobei das wässrige Reaktionsmedium ein saures Pufferungsmittel, Nitrationen, Hydroxylamin und Metallverunreinigungen enthält;
Einbringen des wässrigen Reaktionsmediums in einen Hydroxylaminsynthesereaktor und
Reduzieren der Nitrationen zu Hydroxylamin in Gegenwart eines Katalysators in wässrigem Reaktionsmedium.

2. Verfahren zur Herstellung von Hydroxylamin nach Anspruch 1, wobei die Menge an Cu-Metall weniger als 0,05 ppm beträgt.

3. Verfahren zur Herstellung von Hydroxylamin nach Anspruch 1, wobei das saure Pufferungsmittel aus einer Gruppe ausgewählt ist, bestehend aus Schwefelsäure, Phosphorsäure und Salzen davon.

4. Verfahren zur Herstellung von Hydroxylamin nach Anspruch 1, wobei das saure Pufferungsmittel ein Phosphat ist.

5. Verfahren zur Herstellung von Hydroxylamin nach Anspruch 1, wobei der Schritt der Reduktion der Nitrationen zum Hydroxylamin bei einer Temperatur von 20 bis 100°C durchgeführt wird.

6. Verfahren zur Herstellung von Hydroxylamin nach Anspruch 1, wobei der Schritt der Reduktion der Nitrationen zum Hydroxylamin bei einem Druck von 10 bis 30 kg/cm² durchgeführt wird.

7. Verfahren zur Herstellung von Hydroxylamin nach Anspruch 1, wobei der Schritt der Reduktion der Nitrationen zum Hydroxylamin bei einem pH-Wert von 0,5 bis 6 durchgeführt wird.

8. Verfahren zur Herstellung von Hydroxylamin nach Anspruch 1, wobei der Katalysator aus der Gruppe ausgewählt ist, bestehend aus Pd- und Pd-Pt-Edelmetalle.

## Revendications

1. Procédé de fabrication d'hydroxylamine, comprenant les étapes de :
prétraiter un milieu réactionnel aqueux prélevé à partir d'une réaction d'oximation dans un procédé à cycle hydroxylamine-oxime pour réduire la quantité de Cu métal dans le milieu réactionnel aqueux à moins de 0,09 ppm, ledit milieu réactionnel aqueux comprenant un agent tampon acide, des ions nitrates, de l'hydroxylamine et des impuretés métalliques ;
introduire le milieu réactionnel aqueux dans un réacteur de synthèse d'hydroxylamine ; et
réduire les ions nitrates en hydroxylamine en présence d'un catalyseur dans le milieu réactionnel aqueux.

2. Procédé de fabrication d'hydroxylamine selon la revendication 1, dans lequel la quantité de Cu métal est moins de 0,05 ppm.

3. Procédé de fabrication d'hydroxylamine selon la revendication 1, dans lequel l'agent tampon acide est choisi dans le groupe constitué par l'acide sulfurique, l'acide phosphorique et les sels de ceux-ci.

4. Procédé de fabrication d'hydroxylamine selon la revendication 1, dans lequel l'agent tampon acide est un phosphate.

5. Procédé de fabrication d'hydroxylamine selon la revendication 1, dans lequel l'étape consistant à réduire les ions nitrates en l'hydroxylamine est effectuée à une température de 20 à 100 °C.

6. Procédé de fabrication d'hydroxylamine selon la revendication 1, dans lequel l'étape consistant à réduire les ions nitrates en l'hydroxylamine est effectuée à une pression de 10 à 30 kg/cm².

7. Procédé de fabrication d'hydroxylamine selon la revendication 1, dans lequel l'étape consistant à réduire les ions nitrates en l'hydroxylamine est effectuée à un pH de 0,5 à 6.

8. Procédé de fabrication d'hydroxylamine selon la revendication 1, dans lequel le catalyseur est choisi dans le groupe constitué par les métaux nobles Pd et Pd-Pt.
